# EUROPEAN PATENT SPECIFICATION

(11) **EP 2 072 156 B1**
(45) Date of publication and mention of the grant of the patent: **11.05.2011**
(21) Application number: 08102950.6
(22) Date of filing: 27.03.2008
(51) Int. Cl.: B09B 3/00, B29B 17/00, B32B 27/00

(54) **Fabrication method for the production of a construction part, in particular for furniture pieces, construction part and related production apparatus**
Herstellungsverfahren zur Herstellung eines Bauteils, insbesondere für Möbelteile, Bauteil und zugehörige Herstellungsvorrichtung
Procédé de fabrication pour la production d'une pièce de construction, en particulier pour les éléments de mobilier, pièce de construction et appareil de production associé

(30) Priority: 17.12.2007 IT PN20070085
(43) Date of publication of application: 24.06.2009
(73) Proprietor: Snaidero Rino S.p.A., 33030 Maiano (UD) (IT)
(72) Inventor: Snaidero, Edi, 33030 Maiano (UD) (IT)
(74) Representative: Giugni, Valter

(56) References cited:
- DE-A1- 4 213 213
- US-A- 3 671 615
- US-A- 3 734 988

## Description

The present invention refers to a method for the fabrication of a panel, in particular a panel used in the production of furniture pieces; it further refers to a panel obtained with such fabrication method and a production apparatus for carrying out such fabrication method.

Largely known in the furniture-making industry in general is by now the use of panels that are made of materials used as substitutes for solid wood, such as chipboard panels, plywood, and low-density, high-density and medium-density fibreboard panels, which are commonly known in the art also under the acronyms thereof, i.e. LDF, HDF and MDF. Panels of this kind are generally produced starting from wood fragments, generally known as chips in the art, which are first subjected to grinding and fiberizing processes, and are then added with sawdust, glue and additives such as urea resins. After drying, the material is placed into proper moulds so as to obtain a kind of mattress that is then pressed, squared, cut into plates and submitted to smoothing.

Such panels are generally known to anyway have a number of drawbacks, such as for instance a high specific weight, a marked tendency to absorb moisture, thereby giving rise to undesired swelling effects, and the toxic and/or polluting vapour emissions that are released both as the panels are submitted to hot forming and during the lifecycle of the manufactured panel due to the evaporation of the solvents contained in the binding agents used to aggregate the wood chips.

A further problem that is generally encountered with panels of the above-cited kind lies in the fabrication thereof, which is known to require the use of considerable amounts of virgin, i.e. unprocessed wood, thereby generating a clear impact on the environment owing to the necessary deforestation effect brought about by the need for the raw material to be provided in the required quantities. In fact, only approximately 20% of the wood chips used for the production of MDF panels originate from recycled woodworking scraps and waste. This is due not only to the existing abilities in making use of recovered wood scraps, as well as the actually available amounts of such material, but also to the need for finished panels to be generally obtained with excellent mechanical characteristics, while making use of wood fibres that have already been used to other purposes and, as such, heavily and generally denatured.

A need that is markedly and concretely felt within the woodworking industry in general is therefore the ability of providing and ensuring the availability of panels made of materials that, while being alternative to the wood chips currently used for manufacturing such panels, are capable of ensuring equal or even improved mechanical properties of the panels as compared with the currently known ones. In particular, the need is felt for panels to be provided, which - further to featuring the improved mechanical properties as noted above - are capable to be manufactured with simple production methods requiring a reduced amount of economic resources and using low-cost waste and scrap materials.

Various methods have already been proposed in the past for manufacturing panels intended for use in the furniture-making industry in general, all of which contemplate the use of recycled materials, such as paper, plastics, aluminium cans, rags and packaging materials of various kind and nature, as duly grinded and aggregated under addition of a urea resin. An example of a panel-making method of this kind is described in the Italian patent application No. PN95A000009, in which, however, no indication whatsoever is given concerning either the actual quantities of the materials used to make up the panel or the average composition of the latter. In consideration of the fact that a successful outcome of the panel forming operation and the ultimate mechanical properties of the same panel depend on the composition thereof, it is in all cases necessary for such composition to be duly defined.

Known from the Spanish patent publication ES 2 258 411 is a panel making method for producing panels intended for use in the furniture-making industry in general, in which a mass of solid residues of urban, i.e. residential and commercial wastes is mixed with an adhesive for forming a panel. Plainly stated in this patent is the fact that - for obtaining the panels according to the invention described therein - the type, kind, class, physical and chemical characteristics or composition of the waste materials used in the process, as well as the proportion in which these are used, are of no particular relevance. No remark whatsoever is made in this document in connection with or regarding the harmful or noxious character and effects of some substances that may be potentially contained in the wastes, such as for instance chemical agents, organic residues, and the like, and that are not desirably included in a panel intended for use in furniture pieces. Cited in the same patent is the possibility for the composition of the wastes to be varied in view of modifying the mechanical properties of the resulting panel, but no indication is given at all about the way in which the composition of the mass of wastes used in the process is likely to affect the mechanical properties of the same panel, actually, nor any indication is given at all about the effect of the amount and kind of glue or binder used in the process on the same mechanical properties of the panel.

It is therefore an object of the present invention to provide a fabrication method for manufacturing a panel, in particular of the kind adapted to be used in furniture making, which features mechanical properties that are equal to or even better than those of currently known panels, and which is made of materials that are alternative to those currently used to these or similar production purposes.

Within this general object, it is a purpose of the present invention to provide a method for producing a panel that is made starting from a material that, while an effective alternative to wood chips, is readily available at a low cost.

It is a further purpose of the present invention to provide a panel that has improved processability or workability properties as compared with panels of fibrous materials, i.e. chipboard or fibreboard panels of known type.

Yet another purpose of the present invention is to provide a method for producing panels intended for use in the furniture-making industry in general, which allows for a reduced usage of both economic resources and energy as compared with traditional prior-art panel-making processes.

It is a further purpose of the present invention to provide a panel, which is effective in ensuring fully adequate health-unaffecting and fire-resistance properties, while reducing environmental pollution at the same time.

Yet a further purpose of the present invention is to provide a production apparatus which enables the method for producing a panel according to the present invention to be carried out in an effective and low-cost manner.

According to the present invention, these aims and objects are reached in a fabrication method incorporating the features and characteristics as recited in claim 1 appended hereto, a panel incorporating the features and characteristics as recited in claim 12 appended hereto, and a production apparatus incorporating the features and characteristics as recited in claim 21 appended hereto.

Features and advantages of the present invention will anyway be more readily understood from the detailed description that is given below by way of non-limiting example with reference to the accompanying drawings, in which:
- Figure 1 is a cross-sectional view of a first embodiment of a panel according to the present invention;
- Figure 2 is a cross-sectional view of a second embodiment of a panel according to the present invention;
- Figure 3 is a cross-sectional view of a third embodiment of a panel according to the present invention;
- Figure 4 is a cross-sectional view of a fourth embodiment of a panel according to the present invention;
- Figure 5 is a schematical view of a production apparatus for the production of a panel according to the present invention.

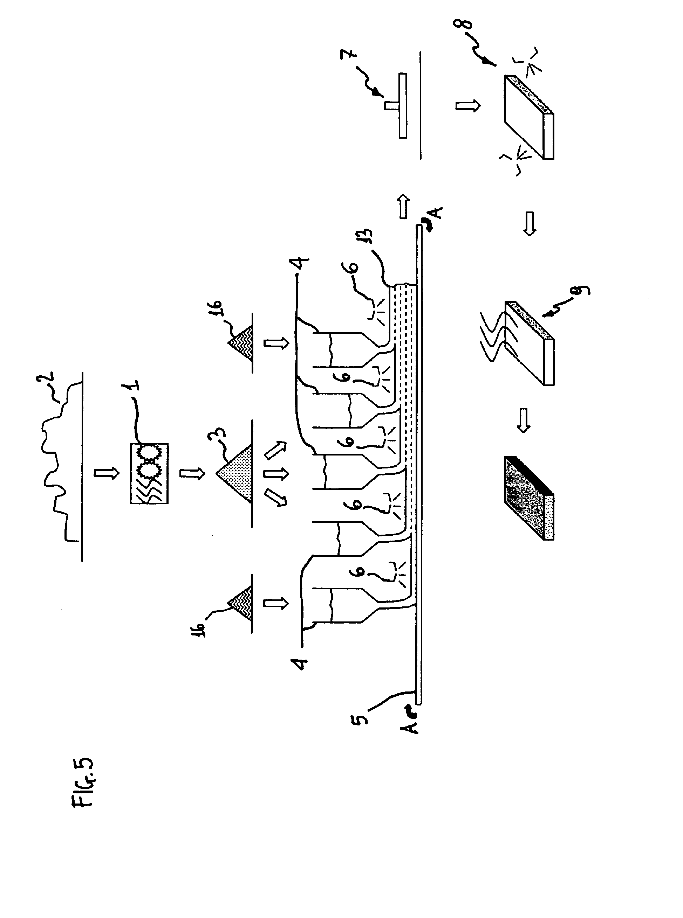

The fabrication method according to the present invention is substantially based on the preparation of a mass of combustible waste materials 2 (see Figure 5) in a proper composition thereof, and the aggregation of such waste materials through the addition of a binding agent.

The mass of combustible waste materials intended for use in connection with the inventive panel-making method is classified in the European Waste Catalogue (EWC) under the number 191210, and has following composition on an average:

| **COMPOSITION BY TYPE OF WASTE** | **Weight-%** |
|---|---|
| PAPER AND CARDBOARD | 10 to 30 |
| WET WASTE | 0.5 to 6 |
| POLYMERIC MATERIALS | 20 to 40 |
| MENTALS, GLASS, INERTS | 1 to 6 |
| MISCELLANEOUS MATERIALS | 18 to 68.5 |

Usually, this kind of waste material mix is largely used as a fuel in either energy-recovery incineration plants or even in production sites involving a considerable usage of heat and/or electric energy.

According to the present invention, a mass 2 of EWC 191210 combustible refuse, preferably ranging from 450 kg to 900 kg per cubic metre of finished product, is dried at a temperature ranging within 180°C and 220°C in a proper drying unit 1 (Figure 5). The waste or refuse mass 2 is further micronized, i.e. ground to very fine particles in machines provided with adjacent rotating disks, the relative position of which can be adjusted in view of modifying the grain size of the micronized, i.e. ground material.

The shredded, i.e. ground mass of combustible waste 3 - preferably prior to being introduced in the actual panel production cycle - may be added with calcium oxide (CaO), or caustic lime, in a proportion amounting to 3 weight-percent of the mass of refuse. The calcium oxide reacts with the moisture contained in the organic component of the mass, thereby giving rise to a strongly exothermic reaction (CaO + H₂O ↔ Ca(OH)₂ + 63.6 KJ/mole) and turning into calcium hydroxide (Ca(OH)₂) or hydrated lime. The chemical reaction brings about a disinfectant effect on the organic residues in the mass of refuse, as well as an effect of thermal destruction of micro-organisms that may possibly be present in such residues.

In the following processing steps, as this shall be described in greater detail further on, the calcium hydroxide remaining in the mass of refuse absorbs a part of the thermal energy, which the mass of waste material is subject to, and turns again partially into calcium oxide. The presence of caustic lime within the mass does not constitute any hindrance in view of the following processing steps, i.e. does not interfere with the following processing steps, since it is due to gradually be turned again into calcium hydroxide by the moisture that the material being processed slowly absorbs from the ambient air prior to its being ultimately formed into a finished panel. Then, once the panel is finally formed, its contact with the air will enable the calcium hydroxide to turn into calcium carbonate under deposition of the latter according to following irreversible reaction:

Ca(OH)₂ + CO₂ + H₂O = Ca²⁺ + 2OH⁻ + 2H⁺ + CO₃²⁻ → Ca(CO₃) + 2H₂O

Such calcium carbonate will anyway be present in the panel in quite moderate quantities and will practically perform as a filler in the finished panel.

Upon conclusion of the micronizing or grinding step on the - possibly treated with calcium oxide - mass 2 of combustible refuse, the same mass is spread over a conveyor belt 5 (Figure 5). Spreading the mass 2 of refuse over the conveyor belt can be done in an even manner by just a single shedding device 4so as to form a kind of mattress 13 having a homogeneous consistency, or the mass 2 may be divided into several portions, wherein each such portion will then be spread over the conveyor belt 5 by various shedding devices 4 operating at different flow rates, so that the resulting mattress 13 formed in this way will feature a structure made up by a corresponding plurality of possibly differently thick layers.

As this shall be described in greater detail further on, each such shedding device 4 is provided with a dispenser 6 of binding agent, so that said mattress 13 may be made up by a plurality of layers having a concentration of binding agent that varies from layer to layer. This differentiation in the composition of the individual layers enables - during the following steps of the inventive panel-making method - the layers of the mattress 13 to be aggregated and, as a result, become compact in different times and different modes, thereby contributing to a reduction in the overall energy usage of the fabrication process, as well as shorter production times, altogether.

According to a further embodiment of the panel, some of the above-cited shedding devices 4 may be provided and designed to spread out a material that is different from the micronized mass 2 of refuse and may for instance consist of a fibrous material 16 such as wood chips, textile fibres or the like.

The single-layered or multi-layered mattress 13 thus formed by the shedding devices 4 is sent to a press 7, which presses it and - at the same time - heats it up to such a temperature as to cause the polymeric material contained in the mass 2 of combustible refuse to melt. Preferably, such hot-pressing operation is performed at a temperature situated anywhere between 150°C and 250°C. If the mattress 13 has a multi-layer structure and some of such layers are provided with binding agent, the processing temperature has the effect of causing this binding agent to dry up, thereby effecting the - at least partial - aggregation of the material, which such layers are made of. Furthermore, the action of heat is effective in ensuring the elimination of micro-organisms that may be possibly present in the organic residues of the combustible refuse, further to enabling a first aggregation of the material, which said combustible refuse is made of.

Depending on the structure making up the mattress 13, at the end of the above-cited pressing and heating step, such mattress 13 will turn out as being formed of layers that are almost fully aggregated and layers that are on the contrary still inconsistent.

The panel is completed by incorporating in the mattress 13 a further amount of binding agent consisting of a preferably soluble resin selected from the group including sodium silicate (known also as "water glass" in the art), acrylic resins, phenol-based resins, vinyl-based resins and urea-based resins. The dry residue or solid content of this soluble resin lies anywhere between 30% and 50% and the quantity of resin ranges from 200 kg to 1100 kg per cubic metre of finished product. In this step of the inventive production method, the above-mentioned incorporation of the binding agent into the mattress 13 occurs preferably by impregnation.

In view of promoting the impregnation of the mattress 13 and reaching an optimum degree of permeation of the binding agent therethrough, the same binding agent is forced between and through the interstices of the mattress 13 by subjecting the latter to a pressure gradient. In particular, an impregnation with water glass would confer water-repelling and self-extinguishing properties to the product.

Once impregnated with binding agent, the mattress 13 is allowed to dry in a drying unit 9 in order to remove the liquid component of the binding agent.

At the end of the drying process, a cubic meter of finished product will include a quantity of soluble resin ranging from 240 kg to 850 kg.

With reference to Figure 5, an apparatus for producing a panel according to the present invention comprises a drying and micronizing unit 1 that dries and grinds a mass 2 of combustible refuse down to a degree of residual moisture and a grain size of the ground particles that are adjustable according to the particular needs and requirements. The ground mass of refuse 3 produced by the unit 1 is sent into a plurality of shedding devices 4, which are arranged in correspondence to a conveyor belt 5 that receives the material being spread thereupon by said shedding devices 4 to thereby form a mattress 13. Such shedding devices 4 are arranged following each other in a sequence in the forward-moving direction of the conveyor belt 5, as indicated by the arrows A in Figure 5, so that the thus formed mattress 13 is enabled to feature a structure comprising one or several layers, wherein the number and the thickness of these layers will depend on the selective activation of the shedding devices 4, the number of shedding devices 4 provided, and the material delivery rate ensured by each one of them.

Some of such shedding devices may also be supplied with a different material than combustible refuse, such as in particular with wood fibres or textile fibres, in view of producing panels having a surface texture that allows for the application of further surface finishing coatings, e.g. paint or veneering coatings, or decorative sheets due to be glued thereupon.

Each shedding device 4 is provided with a dispenser 6 of binding agent adapted to incorporate an adjustable amount of binding agent into the mass of material poured out by the individual shedding device 4, which it is associated to. By activating the dispensers 6 selectively, it is possible for single-layer or multi-layer mattresses to be formed on the conveyor belt 5, wherein each such layer may or may not include a pre-determined concentration of binding agent. Incorporating a binding agent in the mattress 13 as the latter is being formed enables the mechanical strength of the final panel to be differentiated and the various layers of the panel to be consolidated at different moments during the fabrication process. In addition, by selectively acting on both the shedding devices 4 and the dispensers 6 of binding agent, the possibility is given for not only the composition of the individual layers of the mattress 13 being formed on the conveyor belt 5 to be determined, but also the preferred sequence of the layers forming said mattress to be defined. As this will become more readily apparent from the description of some examples of embodiment of the present invention that is given later on, the inventive production apparatus enables both single-layer panels with a homogeneous composition and multilayer panels having layers differing from each other as far as the thickness, he number and the composition thereof are concerned, to be formed. In this way, a finished panel leaving such production apparatus may be used in the construction of a furniture piece, such as a kitchen cabinet or the like, but also in lining or wainscoting the walls of a room, e.g. to sound-proofing or similar purposes.

The mattress 13 formed in this manner on the conveyor belt 5 is carried towards a press 7 and, thereafter, moved towards a unit 8 for the incorporation of a binding agent thereinto. Preferably, the unit 8 comprises means adapted to create a pressure gradient on the mattress 13 in view of assisting the binding agent in penetrating the structure of the mattress.

A drying unit 9 is provided downstream from the unit 8 to dry up the liquid component of the binding agent , thereby conferring the final consistency to the panel.

Four exemplary embodiments of panels produced in accordance with the method of the present invention are described hereinbelow, wherein the amounts of the materials used as basic components of such panels - as referred to one cubic meter of finished product - are as follows:

| **COMPONENT** | **QUANTITY** |
|---|---|
| Paper-based material | 10 to 30 weight-% |
| Polymeric material | 20 to 40 weight-% |
| Inert material | 1 to 6 weight-% |
| Binding agent | 240 to 850 kg/m³ |

### EXAMPLE 1

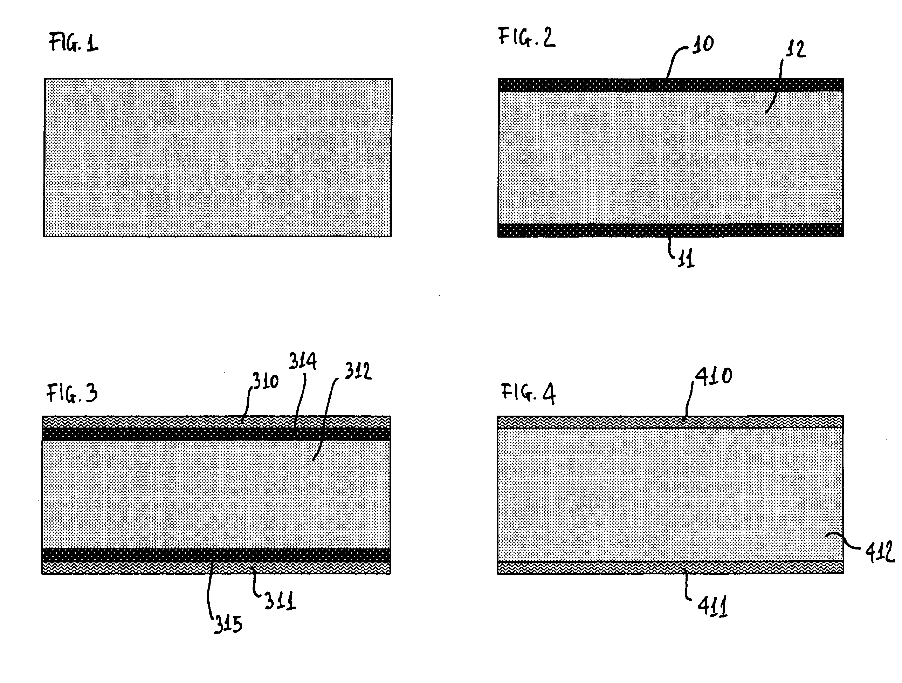

With reference to Figure 1, a mass 2 of combustible waste materials, or refuse, in an amount ranging from 450 kg and 900 kg, as duly dried, ground into very fine particles and possibly added with calcium oxide (CaO), or caustic lime, in a proportion amounting to 3 weight-% of the mass of refuse, is spread by one or several shedding devices 4 (shown in Figure 5) over the conveyor belt 5 so as to form a single-layer mattress 13, in which the mass of refuse is distributed evenly and homogeneously. The thus formed mattress 13 is then pressed at a temperature adapted to cause the polymeric material contained in said mass of combustible refuse to melt so that the mattress 13 is conferred a certain consistency. Thereafter, a quantity of binding agent ranging from 200 kg and 1100 kg per cubic metre of finished product is incorporated in the mattress 13, wherein said binding agent preferably consists of a soluble resin selected from the group including sodium silicate, acrylic resins, phenol-based resins, urea-based resins or vinyl-based resins. The panel forming operation is then completed by drying up the liquid component of the thus incorporated binding agent. Varying the amount of refuse mass and binding agent enables panels to be obtained, which have differing mechanical properties and, in particular, mechanical properties that are best suited to the particular application, which each panel is intended for, i.e. as a construction member for the fabrication of furniture pieces or a wainscoting member for wall lining or sound-proofing uses.

### EXAMPLE 2

With reference to Figure 2, a second embodiment of the inventive panel comprises a multi-layer structure that is obtained by spreading over the conveyor belt 5 (shown in Figure 5) a mass 2 of combustible waste material, or refuse, having a weight ranging from 450 kg to 900 kg, by means of three shedding devices 4 arranged following each other in a sequence in the forward-moving direction of the conveyor belt 5. The mass 2 of combustible refuse is possibly added with calcium oxide (CaO), or caustic lime, in a proportion amounting to 3 weight-% of the mass of refuse. The shedding device 4 in the middle delivers a mass of refuse that is free of binding agent, while the shedding devices 4 at the sides of the middle one deliver a second and a third mass of refuse, which are added with a quantity of binding agent amounting to 600 kg/m³ or less. The resulting mattress 13 is thus formed in three layers 10, 11, 12, and is then submitted to hot-pressing in the press 7 so that the polymeric component present in all three layers of the panel being formed is caused to melt, and the liquid component of the binding agent, which is only present in the outer layers 10, 11 of the panel being formed, is caused to evaporate. In the unit 8 of the production apparatus, a further quantity of binding agent, ranging from 200 kg and 1100 kg, is incorporated in the mattress 13 so that the innermost layer 12 is conferred due consistency. Finally, a drying unit 9 is provided to cause the liquid component of such binding agent to evaporate, thereby completing the panel forming process.

### EXAMPLE 3

Illustrated in Figure 3 is a third embodiment of a panel according to the present invention. In this case, the shedding devices 4 (Figure 5) required to form the mattress are in the number of five and are arranged following each other in a sequence in the forward-moving direction of the conveyor belt 5. The first one and the last one of these shedding devices 4 - as considered with reference to the forward-moving direction of the conveyor belt 5 - are supplied with a fibrous material 16, such as for instance wood or textile fibres, which is then spread over the conveyor belt 5 to create the outermost or surface layers 310, 311 of the panel being formed. Each mass of fibrous material 16 is added with a binding agent through dispensers 6 provided immediately downstream from the respective shedding device 4. This binding agent is added in a quantity that is preferably less than or equal to 600 kg per cubic meter of finished product. The second shedding device 4 and the penultimate one spread a respective mass of combustible refuse that lies over the fibrous material 16 to create a pair of layers 314 and 315 extending between, i.e. upon and under the afore-cited layers 310, 311 of fibrous material 16. The mass of combustible refuse delivered by both the second shedding device 4 and the penultimate one is again added with a binding agent through dispensers 6 provided immediately downstream from the respective shedding device 4, wherein this binding agent is added in a quantity that is preferably less than or equal to 600 kg per cubic meter of finished product. The type and quantity of binding agent used for forming the layers 310, 311 of fibrous material 16 may be different from the type and quantity of binding agent used to form the layers 314, 315 of combustible material, and each such binding agent may be selected from resins of a soluble type, such as sodium silicate, acrylic resins, phenol-based resins, urea-based resins or vinyl-based resins.

The third shedding device 4 in the group of five shedding devices arranged following each other in a sequence along the conveyor belt 5, spreads over the conveyor belt 5 a mass of combustible refuse - as possibly added with calcium oxide (CaO) in a proportion amounting to 3 weight-% of the mass of refuse - to thereby form the innermost layer 312 of the panel, wherein no binding agent is added to such mass of material as the mattress 13 is being so prepared on the conveyor belt 5. The overall amount of combustible refuse used in the formation of the mattress 13 is preferably comprised between 450 kg and 900 kg per cubic meter of finished product.

The mattress 13 - as made up by the overlying layers 310, 311, 312, 314, 315 - is then pressed in a press 7 (Figure 5) at such a temperature as to cause the polymeric material contained in said mass of combustible refuse to melt. The heat, which the mattress 13 is submitted to during pressing, is such as to also cause the liquid component of the binding agent contained in the layers 310, 311, 314, 315 of the mattress 13 to evaporate. Thereafter, by means of a unit 8, a quantity of binding agent comprised between 200 kg and 1100 kg is incorporated in the mattress 13, which - in this phase of the process - is formed of outermost layers 310, 311, 314, 315 that are almost fully aggregated, and an innermost portion or layer 312 that is still lacking consistency. The evaporation of the liquid component of the binding agent takes place in the drying unit 9, where also the panel formation process is completed.

### EXAMPLE 4

A fourth embodiment of a panel according to the present invention is provided substantially according to what has been described in connection with the second exemplary embodiment set forth above, the basic difference lying in this case in the fact that the outermost layers 410, 411 of the panel are produced by shedding devices 4 that are supplied with fibrous material 16, such as wood or textile fibres. Binding agent in a quantity that is less than or equal to 600 kg per cubic metre of finished product is incorporated in the layers 410, 411, as the mattress 13 is being formed, through the dispensers 6 of binding agent. In this case, the type of binding agent used for the layers 410, 411 of fibrous material 16 may be different from the type of binding agent used in the innermost layer 412, which is incorporated in the mattress after that the latter has been pressed.

Although the afore-cited examples 2 to 4 refer to panels having a layered structure that extends symmetrically relative to the median plane of the panel, it can be most readily appreciated that the inventive production apparatus, as illustrated in Figure 5, and the fabrication method described hereinbefore may be adapted and used to produce panels that may for example consist of two surface or outer layers of fibrous material 16 and combustible refuse, respectively, both of them added with binding agent during the mattress forming process, and an inner portion or layer of combustible refuse, which on the contrary receives the binding agent during the pressing step of the process. The thickness of the layers can be varied by modifying the material delivery rate of the shedding devices 4.

The Table below lists the average values of some basic mechanical properties found in panels made in accordance with the present invention, wherein such values have been measured using mechanical test methods as provided for by the related standards indicated in the same Table. In addition, said values are set forth in comparison with the corresponding ones that are typical of a chipboard panel of a traditional type. The data in the Table refer to tests that have been carried out on panels having a thickness of 20 mm.

| **Panel type (20 mm thick)** | **Swelling max. % EN 317** | **Flexural strength (N/mm²) EN 310** | **Modulus of elasticity (N/mm²) EN 310** | **Screw extraction resistance, perpendicularly relative to the plane, (N) EN 320** | **Cohesion (N/mm²) EN 319** |
|---|---|---|---|---|---|
| Traditional chipboard | 13 to 14 | 11 to 13 | 1500 to 1600 | 600 to 800 | 0.30 to 0.45 |
| According to invention | 7 to 8 | 13 to 16 | 2500 to 3500 | 1000 to 2000 | 0.50 to 1.00 |

Fully apparent from the above description is therefore the ability of the present invention to effectively reach the aims and advantages cited afore, through the provision of a fabrication method for producing a panel that is well adapted to furniture-making and similar purposes, while effectively making good use of recovery materials from unsortable or undifferentiable urban wastes, thereby contributing to reducing the extent of the necessary deforestation implied by the production of prior-art panels of the considered kind.

Fully apparent is also the ability of a panel produced with the method according to the present invention to effectively cut production costs and reduce energy usage as compared with prior-art production methods that are currently used in the production of panels for the furniture-making industry, the inventive panel featuring further an improved workability as compared with prior-art panels of fibrous material.

## Claims

1. Fabrication method for producing a panel, in particular a panel for use in the furniture-making industry, comprising following steps:
a) supplying a first mass of combustible refuse (2) including:
- 10 to 30 weight percent of paper-based material,
- 0.5 to 6 weight percent of wet refuse,
- 20 to 40 weight percent of polymeric material,
- 1 to 6 weight percent of inert material;
b) drying and micronizing said mass of combustible refuse (2);
c) spreading said mass (2) in one or several layers over a planar surface so as to form a mattress (13);
d) pressing said mattress (13) at a temperature that is equal to or higher than the melting temperature of said polymeric material included in the mass (2);
e) incorporating a first quantity, ranging from 200 kg to 1100 kg per cubic meter of finished product, of binding agent into said mattress (13);
f) drying up the binding agent thus incorporated in the mattress (13).

2. Fabrication method for producing a panel according to claim 1, wherein said mass of combustible refuse (2) is comprised between 450 kg and 900 kg per cubic metre of finished product.

3. Fabrication method for producing a panel according to claim 1 or 2, wherein said binding agent is a resin of a soluble type selected from the group including sodium silicate , acrylic resin, phenol-based resin, urea-based resin or vinyl-based resin.

4. Fabrication method for producing a panel according to any of the preceding claims, wherein said binding agent has a dry residue comprised between 30 and 50 percent.

5. Fabrication method for producing a panel according to any of the preceding claims, wherein drying of said mass of combustible refuse (2) in said step b) of the method is carried out at a temperature comprised between 180°C and 220°C.

6. Fabrication method for producing a panel according to any of the preceding claims, wherein said step e) of the method includes impregnating the mattress (13) formed in the preceding step d).

7. Fabrication method for producing a panel according to any of the preceding claims, wherein said step b) of the method includes dividing said mass of combustible refuse (2) into two or more portions, and said step c) of the method includes incorporating, in at least one of said portions of mass (2), a second quantity of binding agent, amounting up to 600 kg per cubic metre of finished product, so as to obtain a mattress (13) comprising a plurality of layers (10, 11, 12; 310, 311, 312, 314, 315; 410, 411, 412) having a differentiated content of binding agent.

8. Fabrication method for producing a panel according to claim 7, wherein said second quantity of binding agent is incorporated in at least one of the outermost layers (10, 11; 310, 311, 314, 315; 410, 411) of said mattress (13).

9. Fabrication method for producing a panel according to any of the preceding claims, wherein said mattress (13) is covered by a layer (310, 311; 410, 411) of fibrous material (16), to which a third quantity of binding agent amounting up to 600 kg per cubic metre of finished product has been added.

10. Fabrication method for producing a panel according to claim 9, wherein said fibrous material (16) comprises wood chips or textile fibres.

11. Fabrication method for producing a panel according to any of the preceding claims, wherein, prior to carrying out said step b) of the method, calcium oxide is added to the mass of combustible refuse (2) in a proportion of 3 weight percent.

12. Panel obtained by the method of claim 1, in particular for use in the furniture-making industry, comprising:
- an amount of paper-based material ranging from 10 to 30 weight percent,
- an amount of refuse,
- an amount of polymeric material ranging from 20 to 40 weight percent,
- an amount of inert material ranging from 1 to 6 weight percent,
- a dry residue of binding agent in a density ranging from 240 kg/m³ to 850 kg/m³.

13. Panel according to claim 12 comprising a layered structure, wherein layers (10, 11, 12; 310, 311, 312, 314, 315; 410, 411, 412) have a concentration of binding agent that differs from layer to layer.

14. Panel according to claims 13 having a screw extraction strength ranging from 1000 N on the edge of the panel to 2000 N on the face of the panel, said screw extraction strength being measured in a panel having a thickness of 20 millimetres.

15. Panel according to any of the claims 12 to 14 having a flexural strength ranging from 13 N/mm² to 16 N/mm², said flexural strength being measured in a panel having a thickness of 20 millimetres.

16. Panel according to any of the claims 12 to 15 having a modulus of elasticity ranging from 2500 N/mm² to 3500 N/mm², said modulus of elasticity being measured in a panel having a thickness of 20 millimetres.

17. Panel according to any of the claims 12 to 16 having a thickness swelling ranging from 7% to 8% after 24 hours of immersion in water, said swelling being measured in a panel having a thickness of 20 millimetres.

18. Panel according to any of the claims 12 to 17 having a cohesion ranging from 0.50 N/mm² to 1.00 N/mm².

19. Use of a panel according to any of the claims 12 to 18 in the production of furniture pieces.

20. Use of a panel according to any of the claims 12 to 18 for room soundproofing.

21. Apparatus for the production of a panel according to any of the claims 12 to 20, **characterized in that** it comprises a drying and micronizing unit, a conveyor belt (5) arranged in correspondence to a plurality of shedding devices (4) adapted to spread a mass (2, 16) of material over said conveyor belt (5) to form a mattress (13) thereupon, said shedding devices (4) being arranged in a sequence following each other in the moving direction of said conveyor belt (5), each of said shedding devices (4) being further provided with a dispenser (6) of binding agent, a press (7) being further arranged for pressing said mattress (13).

22. Apparatus according to claim 21, wherein said shedding devices (4) and said dispensers (6) of binding agent are operable selectively so as to obtain, on said conveyor belt (5), a mattress (13) comprising a plurality of layers (10, 11, 12; 310, 311, 312, 314, 315; 410, 411, 412) having a differentiated content of binding agent.

23. Apparatus according to claim 21 or 22, wherein said conveyor belt (5) conveys said mattress (13) towards the press (7).

24. Apparatus according to any of the claims 21 to 23, further comprising a unit (8) provided to incorporate a binding agent into said mattress (13).

25. Apparatus according to claims 23 and 24, wherein said unit (8) is arranged downstream from said press (7).

26. Apparatus according to claim 24 or 25, wherein said unit (8) comprises means adapted to generate a pressure gradient between two portions of said panel.

27. Apparatus according to any of the claims 21 to 26, further comprising a drying unit (9) for curing and solidifying said binding agent.

## Patentansprüche

1. Fertigungsverfahren zur Herstellung einer Platte, insbesondere einer Platte zur Verwendung in der Möbelindustrie, welches folgende Schritte umfasst:
a) Zuführen einer ersten Masse eines brennbaren Abfallstoffes (2), beinhaltend:
- 10 - 30 Gew.-% Papier-basiertes Material,
- 0,5 - 6 Gew.-% nasse Abfallstoffe,
- 20 - 40 Gew.-% polymeres Material,
- 1 - 6 Gew.-% inertes Material;
b) Trocknen und Mikronisierung der Masse aus brennbarem Abfallstoff (2);
c) Verteilen der Masse (2) in einer oder mehreren Schichten über eine ebene Fläche, so dass eine Matte (13) gebildet wird;
d) Pressen der Matte (13) bei einer Temperatur, die gleich groß oder größer als die Schmelztemperatur des in der Masse (2) enthaltenen polymeren Material ist,
e) Einbringen einer ersten Menge, die zwischen 200 - 1100 Kilogramm pro Kubikmeter des fertigen Produktes beträgt, an Bindemittel in die Matte (13);
f) Eintrocknen des auf diese Weise in die Matte (13) eingebrachten Bindemittels;

2. Fertigungsverfahren zur Herstellung einer Platte nach Anspruch 1, wobei die Masse an brennbarem Abfallstoff (2) zwischen 450 und 900 Kilogramm pro Kubikmeter des fertigen Produktes beträgt.

3. Fertigungsverfahren zur Herstellung einer Platte nach Anspruch 1 oder 2, wobei das Bindemittel ein Harz vom löslichen Typ ist, das aus der Gruppe gewählt ist, die Natriumsilikat, Acrylharz, Phenol-basiertes Harz, Harnstoffbasiertes Harz oder Vinyl-basiertes Harz enthält.

4. Fertigungsverfahren zur Herstellung einer Platte nach einem der vorhergehenden Ansprüche, wobei das Bindemittel einen trockenen Rückstand aufweist, der zwischen 30 und 50 % liegt.

5. Fertigungsverfahren zur Herstellung einer Platte nach einem der vorhergehenden Ansprüche, wobei das Trocknen der Masse an brennbarem Abfallstoff (2) bei Schritt (b) des Verfahrens bei einer Temperatur zwischen 180 °C und 220 °C ausgeführt wird.

6. Fertigungsverfahren zur Herstellung einer Platte nach einem der vorhergehenden Ansprüche, wobei der Schritt (e) des Verfahrens ein Durchtränken der beim vorhergehenden Schritt (d) ausgebildeten Matte (13) beinhaltet.

7. Fertigungsverfahren zur Herstellung einer Platte nach einem der vorhergehenden Ansprüche, wobei der Schritt (b) des Verfahrens beinhaltet, dass die Masse an brennbarem Abfallstoff (2) in zwei oder mehrere Teile unterteilt wird, und der Schritt (c) des Verfahrens beinhaltet, dass in mindestens einen der Teile der Masse (2) eine zweite Menge an Bindemittel eingebracht wird, die bis zu 600 Kilogramm pro Kubikmeter des fertigen Produktes beträgt, so dass eine Matte (13) erhalten wird, die eine Mehrzahl von Schichten (10, 11, 12; 310, 311, 312, 31a, 315; 410, 411, 412) aufweist, welche einen unterschiedlichen Gehalt an Bindemittel aufweisen.

8. Fertigungsverfahren zur Herstellung einer Platte nach Anspruch 7, wobei die zweite Menge an Bindemittel in mindestens eine der ganz außen liegenden Schichten (10, 11; 310, 311, 314, 315; 410, 411) der Matte (13) eingebracht wird.

9. Fertigungsverfahren zur Herstellung einer Platte nach einem der vorhergehenden Ansprüche, wobei die Matte (13) durch eine Schicht (310, 311; 410, 411) an fasrigem Material (16) bedeckt wird, dem eine dritte Menge an Bindemittel, die bis zu 600 Kilogramm pro Kubikmeter des fertigen Produktes beträgt, zugesetzt wurde.

10. Fertigungsverfahren zur Herstellung einer Platte nach Anspruch 9, wobei das fasrige Material (16) Holzschnitzel oder Textilfasern beinhaltet.

11. Fertigungsverfahren zur Herstellung einer Platte nach einem der vorhergehenden Ansprüche, wobei, vor Ausführen von Schritt b) des Verfahrens, Calciumoxid der Masse an brennbarem Abfallstoff (2) in einem Anteil von 3 Gew.-% zugesetzt wird.

12. Platte, die durch das Verfahren nach Anspruch 1 erzielt wird, insbesondere zur Verwendung in der Möbelindustrie, aufweisend:
- eine Menge an Papier-basiertem Material zwischen 10 - 30 Gew.-%,
- eine Menge an Abfallstoff,
- eine Menge an polymerem Material zwischen 20 - 40 Gew.-%,
- eine Menge an inertem Material zwischen 1 - 6 Gew.-%,
- ein trockener Rückstand eines Bindemittels in einer Dichte zwischen 240 kg/m³ und 850 kg/m³.

13. Platte nach Anspruch 12, die eine geschichtete Struktur aufweist, wobei die Schichten (10, 11, 12; 310, 311, 312, 314, 315; 410, 411, 412) eine Konzentration an Bindemittel haben, die von Schicht zu Schicht unterschiedlich ist.

14. Platte nach Anspruch 13, die eine Schraubenauszugsfestigkeit im Bereich von 1000 N an der Kante des Platte bis 2000 N an der Fläche der Platte aufweist, wobei die Schraubenauszugsfestigkeit in einer Platte gemessen wird, deren Dicke 20 mm beträgt.

15. Platte nach einem der Ansprüche 12 bis 14, deren Biegefestigkeit zwischen 13 N/mm² bis 16 N/mm² beträgt, wobei die Biegefestigkeit in einer Platte gemessen wird, deren Dicke 20 mm beträgt.

16. Platte nach einem der Ansprüche 12 bis 15, deren Elastizitätsmodul zwischen 2500 N/mm² bis 3500 N/mm² beträgt, wobei der Elastizitätsmodul in einer Platte gemessen wird, deren Dicke 20 mm beträgt.

17. Platte nach einem der Ansprüche 12 bis 16, bei der ein Aufquellen in Dickerichtung zwischen 7 % bis 8 % nach 24 Stunden eines Untertauchens in Wasser beträgt, wobei das Aufquellen bei einer Platte gemessen wird, deren Dicke 20 mm beträgt.

18. Platte nach einem der Ansprüche 12 bis 17, deren Kohäsion zwischen 0,50 N/mm² bis 1,00 N/mm² beträgt.

19. Verwendung einer Platte nach einem der Ansprüche 12 bis 18 bei der Herstellung von Möbelstücken.

20. Verwendung einer Platte nach einem der Ansprüche 12 bis 18 zur Raum-Schalldämmung.

21. Vorrichtung zur Herstellung einer Platte nach einem der Ansprüche 12 bis 20, **dadurch gekennzeichnet, dass** sie eine Trocknungs- und Mikronisierungseinheit aufweist, wobei ein Förderband (5) in Entsprechung zu einer Mehrzahl von Ausbringvorrichtungen (4) angeordnet ist, die ausgebildet sind, um eine Masse (2, 16) an Material über dem Förderband (5) zu verteilen, um eine Matte (13) auf diesem zu bilden, wobei die Ausbringvorrichtungen (4) in einer Abfolge aufeinanderfolgend in Bewegungsrichtung des Förderbandes (5) angeordnet sind, und jede der Ausbringvorrichtungen (4) weiter mit einer Abgabeeinrichtung (6) für Bindemittel versehen ist, und weiter eine Presse (7) zum Pressen der Matte (13) angeordnet ist.

22. Vorrichtung nach Anspruch 21, wobei die Ausbringvorrichtungen (4) und die Abgabeeinrichtung (6) für Bindemittel wahlweise betrieben werden können, so dass auf dem Förderband (5) eine Matte (13) erzielt wird, die eine Mehrzahl von Schichten (10, 11, 12; 310, 311, 312, 314, 315; 410, 411, 412) aufweist, die einen unterschiedlichen Gehalt an Bindemittel haben.

23. Vorrichtung nach Anspruch 21 oder 22, wobei das Förderband (5) die Matte (13) zur Presse (7) hin transportiert.

24. Vorrichtung nach einem der Ansprüche 21 bis 23, die weiter eine Einheit (8) aufweist, die vorgesehen ist, um ein Bindemittel in die Matte (13) einzubringen.

25. Vorrichtung nach Ansprüchen 23 und 24, wobei die Einheit (8) in Transportrichtung hinter der Presse (7) angeordnet ist.

26. Vorrichtung nach Anspruch 24 oder 25, wobei die Einheit (8) Einrichtungen aufweist, die ausgebildet sind, um einen Druckgradienten zwischen zwei Abschnitten der Platte zu erzeugen.

27. Vorrichtung nach einem der Ansprüche 21 bis 26, die weiter eine Trocknungseinheit (9) für ein Abbinden und Verfestigen des Bindemittels aufweist.

## Revendications

1. Méthode de fabrication pour la production d'un panneau, en particulier un panneau pour utilisation dans l'industrie de fabrication de mobilier, comprenant les étapes suivantes :
a) fourniture d'une première masse de rebuts combustibles (2) incluant :
- 10 à 30 pourcents en poids de matériaux à base de papier,
- 0,5 à 6 pourcents en poids de rebuts humides,
- 20 à 40 pourcents en poids de matériaux polymériques,
- 1 à 6 pourcents en poids de matériaux inertes ;
b) séchage et micronisation de ladite masse de rebuts combustibles (2) ;
c) répartition de ladite masse (2) en une ou plusieurs couches au-dessus d'une surface plane de sorte à former un matelas (13) ;
d) pressage dudit matelas (13) à une température qui est égale ou supérieure à la température de fusion dudit matériau polymérique inclus dans la masse (2) ;
e) incorporation d'une première quantité allant de 200 kg à 1100 kg par mètre cube de produit fini, d'un agent de liaison dans ledit matelas (13) ;
f) asséchage dudit agent de liaison ainsi incorporé dans le matelas (13).

2. Méthode de fabrication pour la production d'un panneau selon la revendication 1, dans laquelle ladite masse de rebuts combustibles (2) est comprise entre 450 kg et 900 kg par mètre cube de produit fini.

3. Méthode de fabrication pour la production d'un panneau selon la revendication 1 ou 2, dans laquelle ledit agent de liaison est une résine d'un type soluble sélectionnée à partir du groupe incluant du silicate de sodium, de la résine acrylique, de la résine à base de phénol, de la résine à base d'urée ou de la résine à base de vinyle.

4. Méthode de fabrication pour la production d'un panneau selon l'une quelconque des revendications précédentes, dans laquelle ledit agent de liaison a un résidu sec compris entre 30 et 50 pourcents.

5. Méthode de fabrication pour la production d'un panneau selon l'une quelconque des revendications précédentes, dans laquelle le séchage de ladite masse de rebuts combustibles (2) dans ladite étape b) de la méthode est effectué à une température comprise entre 180°C et 220°C.

6. Méthode de fabrication pour la production d'un panneau selon l'une quelconque des revendications précédentes, dans laquelle ladite étape e) de la méthode inclut une imprégnation du matelas (13) formé dans l'étape précédente d).

7. Méthode de fabrication pour la production d'un panneau selon l'une quelconque des revendications précédentes, dans laquelle ladite étape b) de la méthode inclut une division de ladite masse de rebuts combustibles (2) en deux ou plusieurs portions, et ladite étape c) de la méthode inclut l'incorporation, dans au moins une desdites portions de masse (2), une deuxième quantité d'agent de liaison, s'élevant à 600 kg par mètre cube de produit fini, de sorte à obtenir un matelas (13) comprenant une pluralité de couches (10, 11, 12 ; 310, 311, 312, 314, 315 ; 410, 411, 412) ayant des teneurs en agent de liaison différentes.

8. Méthode de fabrication pour la production d'un panneau selon la revendication 7, dans laquelle ladite deuxième quantité d'agent de liaison est incorporée dans au moins une des couches externes (10, 11 ; 310, 311, 314, 315 ; 410, 411) dudit matelas (13).

9. Méthode de fabrication pour la production d'un panneau selon l'une quelconque des revendications précédentes, dans laquelle ledit matelas (13) est recouvert d'une couche (310, 311 ; 410, 411) de matériau fibreux (16), à laquelle une troisième quantité d'agent de liaison s'élevant à 600 kg par mètre cube de produit fini a été ajoutée.

10. Méthode de fabrication pour la production d'un panneau selon la revendication 9, dans laquelle ledit matériau fibreux (16) comprend des copeaux de bois ou des fibres textiles.

11. Méthode de fabrication pour la production d'un panneau selon l'une quelconque des revendications précédentes, dans laquelle, avant de réaliser ladite étape b) de la méthode, de l'oxyde de calcium est ajouté à la masse de rebut combustible (2) dans une proportion de 3 pourcents en poids.

12. Panneau obtenu par la méthode de la revendication 1, en particulier pour utilisation dans l'industrie de fabrication de mobilier, comprenant :
a) une quantité de matériaux à base de papier allant de 10 à 30 pourcents en poids,
b) une quantité de rebuts,
c) une quantité de matériaux polymériques allant de 20 à 40 pourcents en poids,
d) une quantité de matériau inerte allant de 1 à 6 pourcents en poids,
e) un résidu sec d'agent de liaison avec une densité allant de 240 kg/m³ à 850 kg/m³.

13. Panneau selon la revendication 12 comprenant une structure en couches, dans lequel les couches (10, 11, 12; 310, 311, 312, 314, 315 ; 410, 411, 412) ont une concentration d'agent de liaison qui diffère d'une couche à l'autre.

14. Panneau selon la revendication 13 ayant une résistance à l'extraction d'une vis allant de 1000 N sur le bord du panneau à 2000 N sur la face du panneau, ladite résistance à l'extraction d'une vis étant mesurée sur un panneau ayant une épaisseur de 20 millimètres.

15. Panneau selon l'une quelconque des revendications 12 à 14 ayant une résistance en flexion allant 13 N/mm² à 16 N/mm², ladite résistance en flexion étant mesurée sur un panneau ayant une épaisseur de 20 millimètres.

16. Panneau selon l'une quelconque des revendications 12 à 15 ayant un module d'élasticité allant de 2500 N/mm² à 3500 N/mm², ledit module d'élasticité étant mesuré sur un panneau ayant une épaisseur de 20 millimètres.

17. Panneau selon l'une quelconque des revendications 12 à 16 ayant un gonflement en épaisseur allant de 7% à 8% après 24 heures d'immersion dans l'eau, ledit gonflement étant mesuré sur un panneau ayant une épaisseur de 20 millimètres.

18. Panneau selon l'une quelconque des revendications 12 à 17 ayant une cohésion allant de 0,50 N/mm² à 1,00 N/mm².

19. Utilisation d'un panneau selon l'une quelconque des revendications 12 à 18 pour la production d'éléments de mobilier.

20. Utilisation d'un panneau selon l'une quelconque des revendications 12 à 18 pour l'insonorisation de salles.

21. Dispositif pour la production d'un panneau selon l'une quelconque des revendications 12 à 20, **caractérisé en ce qu'**il comprend une unité de séchage et de micronisation, un convoyeur à bande (5) agencé en correspondance d'une pluralité de dispositifs de déversement (4) adaptés pour répandre une masse (2, 16) de matériaux sur ledit convoyeur à bande (5) pour former un matelas (13) sur celui-ci, lesdits dispositifs de déversement (4) étant agencés en séquence en se suivant les uns les autres dans la direction de déplacement dudit convoyeur à bande (5), chacun desdits dispositifs de déversement (4) étant en outre équipé d'un distributeur (6) d'agent de liaison, une presse (7) étant en outre agencée pour presser ledit matelas (13).

22. Dispositif selon la revendication 21, dans lequel lesdits dispositifs de déversement (4) et lesdits distributeurs (6) d'agent de liaison peuvent fonctionner de manière sélective de sorte à obtenir, sur ledit convoyeur à bande (5), un matelas (13) comprenant une pluralité de couches (10, 11, 12 ; 310, 311, 312, 314, 315 ; 410, 411, 412) ayant des teneurs en agent de liaison différentes

23. Dispositif selon la revendication 21 ou 22, dans lequel ledit convoyeur à bande (5) transporte ledit matelas (13) vers la presse (7).

24. Dispositif selon l'une quelconque des revendications 21 à 23, comprenant en outre une unité (8) équipée pour incorporer un agent de liaison dans ledit matelas (13).

25. Dispositif selon les revendications 23 et 24, dans lequel ladite unité (8) est agencée en aval de ladite presse (7).

26. Dispositif selon la revendication 24 ou 25, dans lequel ladite unité (8) comprend des moyens adaptés pour générer un gradient de pression entre deux portions dudit panneau.

27. Dispositif selon l'une quelconque des revendications 21 à 26, comprenant en outre une unité de séchage (9) pour faire prendre et solidifier ledit agent de liaison.
